Europäisches Patentamt

European Patent Office

Office européen des brevets

(19)

(11) **EP 1 595 448 A1**

(12) **EUROPEAN PATENT APPLICATION**
published in accordance with Art. 158(3) EPC

(43) Date of publication:
**16.11.2005 Bulletin 2005/46**

(51) Int Cl.7: **A01K 87/00**

(21) Application number: **03815448.0**

(86) International application number:
**PCT/JP2003/000689**

(22) Date of filing: **24.01.2003**

(87) International publication number:
**WO 2004/064511 (05.08.2004 Gazette 2004/32)**

(84) Designated Contracting States:
**AT BE BG CH CY CZ DE DK EE ES FI FR GB GR HU IE IT LI LU MC NL PT SE SI SK TR**

(71) Applicant: **SHIMANO INC.**
**Sakai-shi, Osaka 590-8577 (JP)**

(72) Inventors:
• **KAWASHITA, Gouki, c/o SHIMANO INC.**
**Sakai-shi, Osaka 590-8577 (JP)**
• **OKADA, Muneki, c/o SHIMANO INC.**
**Sakai-shi, Osaka 590-8577 (JP)**
• **KISHIMOTO, Toshihisa, c/o SHIMANO INC.**
**Sakai-shi, Osaka 590-8577 (JP)**

• **KANAZAWA, Masahide, c/o SHIMANO INC.**
**Sakai-shi, Osaka 590-8577 (JP)**
• **MORITA, Atsushi, c/o SHIMANO INC.**
**Sakai-shi, Osaka 590-8577 (JP)**
• **OKUDA, Ryozo, c/o SHIMANO INC.**
**Sakai-shi, Osaka 590-8577 (JP)**

(74) Representative: **Hofmann, Harald**
**Sonnenberg Fortmann,**
**Patent- und Rechtsanwälte,**
**Herzogspitalstrasse 10a**
**80331 München (DE)**

(54) **FISHING ROD**

(57)    The present invention provides a fishing rod composed of a fiber reinforced resin material that can provide preferable characteristics of rod similar to a fishing rod composed of a natural material. The fishing rod has a relationship between its overall length and resonance frequency where they lie in the region surrounded by respective points between 1.5 and 2.2 Hz in the overall length of 2400 mm, between 1.4 and 1.8 Hz in the overall length of 2700 mm, between 1.1 and 1.6 Hz in the overall length of 3000 mm, between 0.9 and 1.6 Hz in the overall length of 3300 mm, between 0.9 and 1.5 Hz in the overall length of 3600 mm, and between 0.9 and 1.4 Hz in the overall length of 3900 mm in coordinates with one axis of the overall length and another axis of the resonance frequency.

*Fig. 2*

EP 1 595 448 A1

**Description**

[Technical Field]

The present invention relates to a fishing rod, and more particularly to a fishing rod composed of a fiber reinforced resin in which reinforced fiber, such as carbon fiber and glass fiber, is impregnated with a synthetic resin.

[Background Art]

In recent years, fishing rods composed of a fiber reinforced resin material in which reinforced fiber, such as carbon fiber and glass fiber, is impregnated with a synthetic resin are popular. Employing this type of material improves weight reduction and physical strength. In addition, bending characteristics, rigidity, restitution characteristics, and so on, are considered as important factors in a fishing rod for operativity in casting tackle or catching up fish. For this reason, the diameter, thickness, and so on, of fishing rod are adjusted to provide preferable characteristics of fishing rod ("Choshi" of rod). For example, the following techniques are proposed. In one technique, a fiber reinforced resin material for producing a rod body is wound so as to be partially overlaid thereon (for example, see Japanese unexamined patent application No. 2002-209477, Fig. 2). In another technique, fiber reinforced resin materials with different elasticities are wound on axially different parts (for example, see Japanese unexamined patent application No. H11-289925, Fig. 2).

It is popular to manufacture fishing rods composed of a fiber reinforced resin material so as to adjust their rigidity, deflection, and so on. However, they do not completely satisfy requirement of anglers yet. Particularly in a hera fishing rod used for hera fishing, the "characteristics of rod" is considered as the most important factor. A fishing rod composed of natural bamboo is valued highly as the best fishing rod with most preferable characteristics of rod by the anglers. Thus, it is evaluated that a hera fishing rod composed of a fiber reinforced resin is inferior in the characteristics of rod to a hera fishing rod composed of natural bamboo.

However, because of its material, it is difficult to uniformly mass-produce this type of fishing rod composed of a natural material, its price is high, and its maintenance is complicated. In addition, since the excellent "characteristics of rod" in this type of fishing rod composed of a natural material is generally achieved by a skilled craftsman, it is difficult to industrially mass-produce it.

Accordingly, in a fishing rod composed of an artificial fiber reinforced resin material, it has been required to achieve the characteristics of rod that is not different from a fishing rod composed of a natural material.

An object of the present invention is to provide a fishing rod composed of a fiber reinforced resin material that can provide preferable characteristics of rod similar to a fishing rod composed of a natural material.

[Disclosure of the Invention]

The inventors of the present invention have been diligently studied to solve the above problem, and, as a result, found that the resonance vibration characteristics of fishing rod was the most important factors that satisfy anglers in terms of "characteristics of rod". The present invention has made based on this finding.

That is, a relationship between the overall length of the fishing rod and the primary resonance frequency of the fishing rod is set so that they lie in the region surrounded by respective points between 1.5 and 2.2 Hz in the overall length of 2400 mm, between 1.4 and 1.8 Hz in the overall length of 2700 mm, between 1.1 and 1.6 Hz in the overall length of 3000 mm, between 0.9 and 1.6 Hz in the overall length of 3300 mm, between 0.9 and 1.5 Hz in the overall length of 3600 mm, and between 0.9 and 1.4 Hz in the overall length of 3900 mm. This region is the region shown in the following Table 1.

(TABLE 1)

Setting the primary resonance frequency within the prescribed range for every overall length of fishing rod can achieve excellent "characteristics of rod" similarly to a fishing rod composed of natural bamboo.

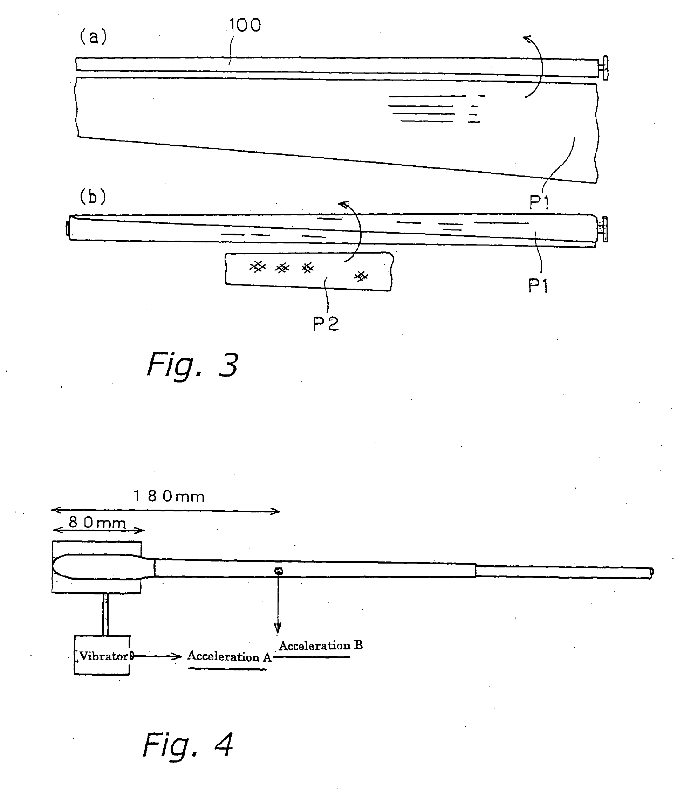

The "primary resonance frequency" refers to as a frequency of a fishing rod measured by the following method. First, a sandwich member sandwiches and secures a fishing rod in the range of 80 mm from the handle-end side end thereof to maintain the fishing rod in the horizontal direction. A vibrator vibrates the fishing rod via this sandwich member (frequency of fishing rod). An acceleration sensor senses the acceleration of this vibrator and obtains an input acceleration value (A). On the other hand, the acceleration sensor senses the acceleration at the position of 180 mm from the handle-end side end of the fishing rod and obtains the output acceleration value (B) (see Fig. 4). The ratios of B/A are plotted in coordinates with one axis of the frequency of fishing rod. The frequencies in the states where the ratios of B/A reach the peaks (resonance vibration states) are obtained as the primary, and secondary resonance frequencies in the increasing order of the frequencies of fishing rod. An example of graph of the ratios of B/A plotted in coordinates with one axis of the frequency of fishing rod is shown below (it is noted that this graph is only an example, but not shows the basis that directly relates to the essential characteristics of this invention).

(TABLE 2)

The primary, secondary, and third frequencies are the frequencies that reach the peaks in order from the left side of the graph, respectively.

The region includes a fishing rod having an overall length of 8 shaku (2400 mm), wherein the primary resonance frequency of the fishing rod is in the range between 1.5 and 2.2 Hz; a fishing rod having an overall length of 9 shaku (2700 mm), wherein the primary resonance frequency of the fishing rod is in the range between 1.4 and 1.8 Hz; a fishing rod having an overall length of 10 shaku (3000 mm), wherein the primary resonance frequency of the fishing rod is in the range between 1.1 and 1.6 Hz; a fishing rod having an overall length of 11 shaku (3300 mm), wherein the primary resonance frequency of the fishing rod is in the range between 0.9 and 1.6 Hz; a fishing rod having an overall length of 12 shaku (3600 mm), wherein the primary resonance frequency of the fishing rod is in the range between 0.9 and 1.5 Hz; and a fishing rod having an overall length of 13 shaku (3900 mm), wherein the primary resonance frequency of the fishing rod is in the range between 0.9 and 1.4 Hz.

In addition, "8 shaku (2400 mm)" refers to as a conceptual range with a certain width according to manufacturing or convention. From this point of view, this "8 shaku" may actually be an extent of the range between 2370 mm and 2490 mm. Similarly, "9 shaku" to "13 shaku" also refers to as a conceptual range with a certain width according to manufacturing or convention.

Furthermore, a relationship between the overall length of the fishing rod and the secondary resonance frequency of the fishing rod is set so that they lie in the region surrounded by respective points between 5.2 and 7.3 Hz in the overall length of 2400 mm, between 4.5 and 6.3 Hz in the overall length of 2700 mm, between 4.3 and 5.6 Hz in the overall length of 3000 mm, between 3.7 and 5.6 Hz in the overall length of 3300 mm, between 3.5 and 5.3 Hz in the overall length of 3600 mm, and between 3.5 and 4.9 Hz in the overall length of 3900 mm in coordinates with one axis of the overall length and another axis of the resonance frequency. This region is the region shown in the following Table 3.

(TABLE 3)

Setting the secondary resonance frequency within the prescribed range for every overall length of fishing rod can achieve excellent "characteristics of rod" similarly to a fishing rod composed of natural bamboo. Additionally, the "secondary resonance frequency" refers to the secondary frequency in the frequencies that are measured by the aforementioned measurement method.

The region includes a fishing rod having an overall length of 8 shaku (2400 mm), wherein the secondary resonance frequency of the fishing rod is in the range between 5.2 and 7.3 Hz; a fishing rod having an overall length of 9 shaku (2700 mm), wherein the secondary resonance frequency of the fishing rod is in the range between 4.5 and 6.3 Hz; a fishing rod having an overall length of 10 shaku (3000 mm), wherein the secondary resonance frequency of the fishing rod is in the range between 4.3 and 5.6 Hz; a fishing rod having an overall length of 11 shaku (3300 mm), wherein the secondary resonance frequency of the fishing rod is in the range between 3.7 and 5.6 Hz; a fishing rod having an overall length of 12 shaku (3600 mm), wherein the secondary resonance frequency of the fishing rod is in the range between 3.5 and 5.3 Hz; and a fishing rod having an overall length of 13 shaku (3900 mm), wherein the secondary resonance frequency of the fishing rod is in the range between 3.5 and 4.9 Hz.

Moreover, a relationship between the overall length of the fishing rod and the third resonance frequency of the fishing rod is set so that they lie in the region surrounded by respective points between 11.6 and 15.4 Hz in the overall length of 2400 mm, between 10.5 and 13.4 Hz in the overall length of 2700 mm, between 9.4 and 12.1 Hz in the overall length of 3000 mm, between 8.5 and 12.0 Hz in the overall length of 3300 mm, between 8.5 and 11.2 Hz in the overall length of 3600 mm, and between 8.2 and 10.5 Hz in the overall length of 3900 mm in coordinates with one axis of the overall length and another axis of the resonance frequency. This region is the region shown in the following Table 4.

## (TABLE 4)

Setting the third resonance frequency within the prescribed range for every overall length of fishing rod can achieve excellent "characteristics of rod" similarly to a fishing rod composed of natural bamboo. Additionally, the "third resonance frequency" refers to the third frequency in the frequencies that are measured by the aforementioned measurement method.

The region includes a fishing rod having an overall length of 8 shaku (2400 mm), wherein the third resonance frequency of the fishing rod is in the range between 11.6 and 15.4 Hz; a fishing rod having an overall length of 9 shaku (2700 mm), wherein the third resonance frequency of the fishing rod is in the range between 10.5 and 13.4 Hz; a fishing rod having an overall length of 10 shaku (3000 mm), wherein the third resonance frequency of the fishing rod is in the range between 9.4 and 12.1 Hz; a fishing rod having an overall length of 11 shaku (3300 mm), wherein the third resonance frequency of the fishing rod is in the range between 8.5 and 12.0 Hz; a fishing rod having an overall length of 12 shaku (3600 mm), wherein the third resonance frequency of the fishing rod is in the range between 8.5 and 11.2 Hz; and a fishing rod having an overall length of 13 shaku (3900 mm), wherein the third resonance frequency of the fishing rod is in the range between 8.2 and 10.5 Hz.

[Brief Description of the Drawings]

Fig. 1 is a view showing the whole fishing rod according to one embodiment.
Fig. 2 is an enlarged cross-sectional view of an intermediate rod 2 of Fig. 1.
Fig. 3 is a view showing a manufacturing process of a rod body.
Fig. 4 is a view showing a measurement state of resonance frequency of the fishing rod according to the present invention.
Fig. 5 is a view showing a measurement state of rigidity of the fishing rod according to the present invention.
Fig. 6 is a reference view in a finite element model.
Fig. 7 is a reference view in a link model.

[Best Mode of Carrying Out the Invention]

A fishing rod in which one embodiment of the present invention is adopted is described.

(Structure of Hera Fishing Rod)

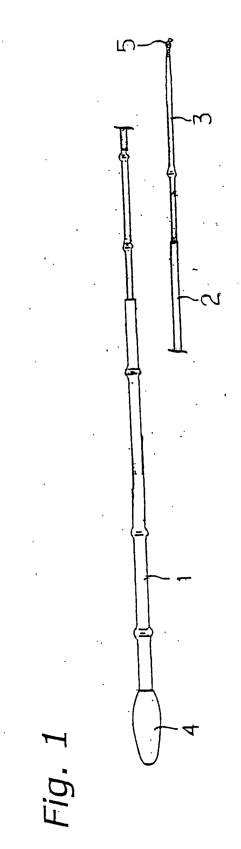

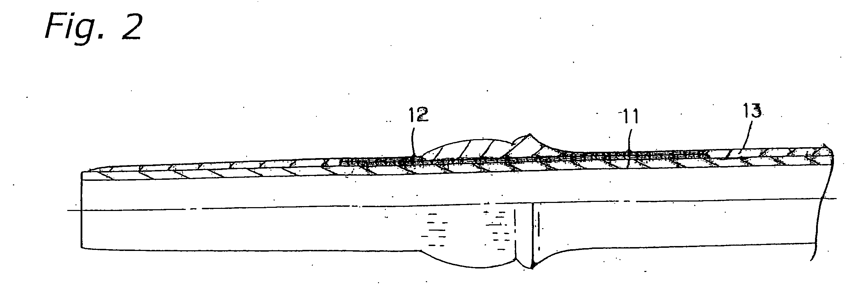

The fishing rod is a hera fishing rod used for hera-crucian fishing. The fishing rod includes three rod bodies of a base rod 1, an intermediate rod 2, and a fore end rod 3 in order from the handle end side, as shown in Fig. 1. These rod bodies are formed by burning a prepreg material reinforced fiber, such as carbon fiber or glass fiber, impregnated with a synthetic resin. As discussed later, prepreg with high specific gravity is partially laminated. These rod bodies are coated to have fake natural bamboo appearance. For example, a knot or a branch trace of bamboo can be formed by three-dimensional coating (see Fig. 2).

The rod bodies are successively connected in a so-called put-over joint manner. For example, the handle-end side end of the intermediate rod 2 is partially inserted into the fore side end of the base rod 1, thus they are connected to each other. But a joint manner for connecting these rod bodies is not limited to a put-over joint. Needless to say, known joints (for example, telescopic joint, spigot joint, and so on) can be applied. In addition, a grip 4 formed by winding a tape-shaped material impregnated with a urethane resin, or the like, is provided on the handle-end side end of the base rod 1, while a fishing line interlock 5 is attached to the fore side end of the fore end rod 3. In the state where these three rod bodies are connected successively, the overall length of hera fishing rod is 9 shaku (2700 mm).

With reference to Fig. 2, the intermediate rod 2 is described as exemplary example of the structure of rod bodies that compose this hera fishing rod.

The intermediate rod 2 includes a main layer 11, a weight layer 12 laminated in a certain range in the axial direction as an outer periphery layer of the main layer 11, and a coating layer 13 laminated on or above the outer periphery of these main layer 11 and weight layer 12.

The main layer 11 is a layer composed of a laminated prepreg material. In this case, one kind or two different kinds of prepreg material(s) can be laminated. For example, tape-shaped and sheet-shaped prepreg materials in which carbon fiber is impregnated with an epoxy resin can be given as the material. In the tape-shaped prepreg material, the carbon fiber is oriented in the circumferential direction or in the direction that extends at a certain angle relative to the circumferential direction. In the sheet-shaped prepreg material, carbon fiber is oriented in the axial direction.

The weight layer 12 is composed of a prepreg material with high specific gravity. The prepreg material with high specific gravity is a material in which glass scrim impregnated with an epoxy resin and metal powder such as tungsten are mixed, for example. This prepreg material with high specific gravity has an extent of 500 to 600 $g/mm^2$, and of thickness of 0.100 to 0.150 mm. This prepreg material with high specific gravity is laminated on the aforementioned main layer 11 in a prescribed axial location calculated as discussed later.

The coating layer 13 is formed by applying a synthetic resin coating material, such as epoxy resin and urethane resin. The stepped difference between the main layer 11 and the weight layer 12 is canceled by this coating layer 13. In the case where a knot of bamboo is formed on the intermediate rod 2 to have fake natural bamboo appearance as shown in Fig. 2, a prepreg material is partially wound, or an epoxy resin is applied thickly and partially, and it is cuts off in a prescribed shape to form a knot of bamboo, and so on. Although other rod bodies have different diameters, and so on, they have similar structure, thus, their description is omitted.

(Method for Manufacturing Hera Fishing Rod)

A method for manufacturing this hera fishing rod is described. The case where its overall length is 2700 mm and its secondary resonance frequency is set to 5.45 Hz is described as an example.

First, the weight balance of a rod body is calculated so that the secondary resonance frequency of the fishing rod is 5.45 Hz when the target base rod 1 to fore end rod 3 are connected to each other as one hera fishing rod. That is, in consideration of target diameters and lengths of base rod 1 to the fore end rod 3, elasticities and weights of a prepreg material and a prepreg material with high specific gravity, and so on, the weight distribution in the rod bodies that provide 5.45 Hz of frequency (resonance frequency) of the fishing rod in the secondary resonance vibration is simulated, then the axial range where the aforementioned prepreg material with high specific gravity should be laminated is calculated for every rod body. In order to simulate such weight distribution, techniques, such as finite element method or link model, can be used.

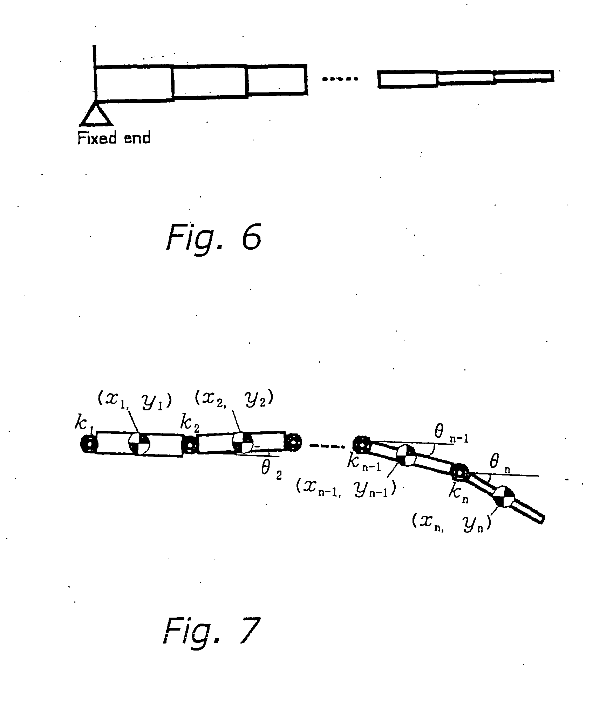

For example, in analysis by a finite element method, as shown in Fig. 6, the fishing rod is modeled by using an elastic cantilever composed of N of one-dimensional cantilever elements that have two degrees of freedom of the translational direction and the rotational direction at node. It is assumed that each cantilever element is uniform inside the element in cross section. Under the boundary condition in the state where one end is an fixed end and the other end is a free end, the resonance frequency and the mode shape corresponding to it are calculated.

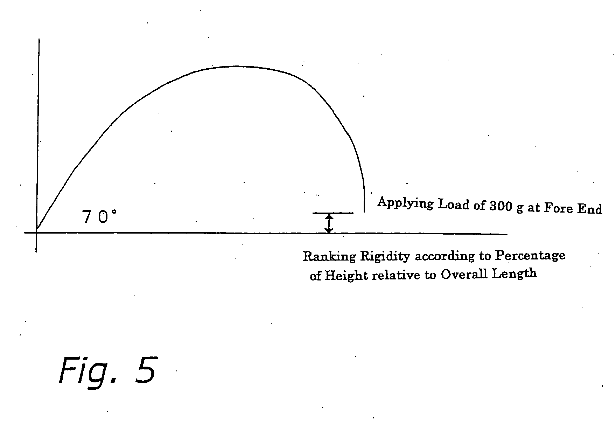

In analysis by a link model, since a fishing rod largely deforms in use, the fishing rod is modeled by using multibody dynamics corresponding to large deformation (geometric nonlinearity). As shown in Fig. 5, in this case, the fishing rod is modeled by using a multibody composed of N of rigid body links with rotation spring at node. The fishing rod is modeled by using a link model, thus, the posture angle between rigid body links adjacent to each other is not limited. Accordingly, it is possible to express even large deformation. The equation of motion of the fishing rod can be represented by Equation 1 under the constraint condition.

(EQUATION 1)

$$\begin{bmatrix} M & \Phi_q^T \\ \Phi_q & 0 \end{bmatrix} \begin{Bmatrix} \ddot{q} \\ \lambda \end{Bmatrix} = \begin{Bmatrix} Q \\ \gamma \end{Bmatrix}$$

Subsequently, as shown in Fig. 3(a), a mandrel 100 that corresponds to diameter or taper variation of each rod body is wound with a necessary prepreg material P1 (a tape-shaped or sheet-shaped material can be wound as discussed above), and a prepreg material with high specific gravity P2 is wound around the prescribed axial range that is calculated as discussed above (Fig. 3(b)). In order to sufficiently provide weight, several plies of the prepreg material with high specific gravity P2 may be wound. Although only one sheet of prepreg material with high specific gravity P2 is wound on the prepreg material P1 in Fig. 3(b), two or more sheets of prepreg materials with high specific gravity P2 may be wound so as to be spaced from each other in the axial direction.

In addition, an epoxy resin is applied to its outer periphery, thus, rod materials corresponding to the base rod 1 to the fore end rod 3 are produced, respectively. These are burned in a furnace. After burning, each rod material is subjected to polish processing on its outer periphery, and is cut at both ends to have a prescribed axial length. Thus, rod bodies are produced.

Although the case where its overall length is 2700 mm and its secondary resonance frequency is set to 5.45 Hz is illustrated, the resonance frequencies in preferable vibration mode are different depending on the length of rod body.

For example, in the case where a hera fishing rod is set based on the primary resonance frequency, the resonance frequency is set to a value within the region of Table 1 depending on the overall length of the fishing rod.

Furthermore, in the case where a hera fishing rod is set based on the secondary resonance frequency, the resonance frequency is set to a value within the region of Table 3 depending on the overall length of the fishing rod.

Moreover, in the case where a hera fishing rod is set based on the third resonance frequency, the resonance frequency is set to a value within the region of Table 4 depending on the overall length of the fishing rod.

In addition, although, in this hera fishing rod, a prepreg material with high specific gravity is overlaid to partially vary the weight in the axial direction of the rod body so that the weight distribution is achieved, for example, a technique that provides a ring-shaped member on the outer periphery of the rod body, or the like, can be employed.

In this embodiment, although this description describes a hera fishing rod, a type of fishing rod is not limited to this. Even in the case of a fishing rod other than hera fishing rod, since, generally, bending characteristics, rigidity, restitution characteristics, and so on, are considered as important factors in a fishing rod for operativity in casting tackle or catching up fish, needless to say, the present invention can be applied to other types of fishing rods. It is very effective to apply the present invention to a fly fishing rod, a lure fishing rod, and so on, for example. In this case, fishing line guides may be located at prescribed locations to partially vary the weight in the axial direction of the rod body so that the weight distribution can be achieved.

[Examples]

Examples in the present invention are now described.

<Lower and Upper Limit Values in Each Resonance Vibration>

There are fishing rods with various weights and various types of rigidity to provide the "characteristics of rod." However, setting these weights and types of rigidity is not unlimited. A too heavy fishing rod cannot be used. A fishing rod with too high or too low rigidity cannot catch up fish. That is, there are ranges of the total weight or the rigidity of a fishing rod that can be actually used as a fishing rod. When a preferable resonance frequency of a fishing rod is specified, it is necessary to take them in consideration. Accordingly, the weight and the rigidity of a fishing rod that can be manufactured were calculated based on known fishing rods. On the basis of the result, the lower and upper limit values were calculated to specify a preferable resonance frequency of a fishing rod.

As for the weight of fishing rod, in additional consideration of material, coating, fishing rod component, and so on, required to manufacture a fishing rod, the weight of a weight addable to a fishing rod material to adjust the resonance frequency was calculated. Specifically, on the basis of a plurality of existing hera fishing rods, for the respective overall lengths of hera fishing rods, the addable weights of weights were calculated. The following Table 5 shows the results.

(TABLE 5)

| | Existing Prod. | | Perm. | Ref. Mat. | Ref. Coat | Addable |
|---|---|---|---|---|---|---|
| | Prod. A | Prod. B | Wgt. | Wgt. | Part Wgt | Wgt. |
| 8 shaku | 67 | 65 | 67 | 37 | 12 | 18 |
| 9 shaku | 84 | 85 | 85 | 48 | 12 | 25 |
| 10 shaku | 86 | 90 | 90 | 57 | 14 | 19 |
| 11 shaku | 88 | 90 | 90 | 57 | 15 | 18 |
| 12 shaku | 97 | 90 | 97 | 68 | 16 | 13 |
| 13 shaku | 100 | 90 | 100 | 72 | 16 | 12 |

Where all units are g.

There are various measurement methods for the rigidity of a fishing rod. For example, the following method can measure the rigidity. That is, in a fishing rod composed of a plurality of connected rod bodies, its handle end is secured at an angle of 75° relative to horizontal direction. A load to an extent of 300 g is applied to the fore end. Thus, fishing rods are ranked according to percentages of the heights of their fore ends from the level surface relative to the overall lengths of the fishing rods (see Fig. 5). The ranges between 0 and 3%, between 3 and 6%, and between 6 and 9% in the fore end position relative to the overall length were defined as ranks 0, 1, and 2, respectively. Some anglers prefer a hera fishing rod with relatively low rigidity. Accordingly, the rigidity of a fishing rod was specified to achieve rank 0.

The range adjustable as the primary to third resonance frequencies of hera fishing rod was calculated based on the addable weights of weights and the rigidity values as discussed above by simulation. Specifically, the aforementioned finite element method was used in the simulation. Techniques, such as link model, can be used. As for arrangement of the weight layer, the weight layer was provided in one location or more locations so that the total weight does not exceed the addable weights in Table 5. Although the arrangement location on the rod is not limited, it is effective for controlling vibration that the weight layer is provided in locations corresponding to the antinode or node of vibration in the resonance vibration. For this reason, in the simulation, the primary to third resonance frequencies were calculated in various combinations where the weight layer can be provided in locations corresponding to the antinode or node of vibration so that the total weight does not exceed the addable weights in Table 5, and thus, the adjustable range of frequency was obtained. The following Table 6 shows the lower limit values of the primary to third resonance frequencies of the respective overall lengths of fishing rods.

(TABLE 6)

| | 2400 mm | 2700 mm | 3000 mm | 3300 mm | 3600 mm | 3900 mm |
|---|---|---|---|---|---|---|
| Prim. | 1.5 | 1.4 | 1.1 | 0.9 | 0.9 | 0.9 |

(TABLE 6)   (continued)

|  | 2400 mm | 2700 mm | 3000 mm | 3300 mm | 3600 mm | 3900 mm |
|---|---|---|---|---|---|---|
| Sec. | 5.2 | 4.5 | 4.3 | 3.7 | 3.5 | 3.5 |
| 3rd | 11.6 | 10.5 | 9.4 | 8.5 | 8.5 | 8.2 |
| Where units are Hz. | | | | | | |

In addition, the resonance frequency generally reduces as a weight member, such as coating and component, is attached. Accordingly, a material to which a weight member such as component is not attached gives the upper limit values of the primary to third resonance frequencies of the respective overall lengths of fishing rods. The following Table 7 shows the results.

(TABLE 7)

|  | 2400 mm | 2700 mm | 3000 mm | 3300 mm | 3600 mm | 3900 mm |
|---|---|---|---|---|---|---|
| Prim. | 2.2 | 1.8 | 1.6 | 1.6 | 1.5 | 1.4 |
| Sec. | 7.3 | 6.3 | 5.6 | 5.6 | 5.3 | 4.9 |
| 3rd | 15.4 | 13.4 | 12.1 | 12.0 | 11.2 | 10.5 |
| Where units are Hz. | | | | | | |

The primary to third resonance frequencies are set in the range obtained as discussed above, thus, it is possible to achieve the "characteristics of rod" of a preferable fishing rod even in a fishing rod that is industrially mass-produced.

<Feeling Evaluation>

Hera fishing rods that have the overall length of 9 shaku (2700 mm) and have different weight distributions and rigidity values were manufactured as 18 kinds of samples. The primary to third resonance frequencies were measured in each hera fishing rod (see Table 8).

(TABLE 8)

| Sample No. | Frequency (actual measured value) | | |
|---|---|---|---|
|  | Prim. | Sec. | 3rd |
| 1 | 1.75 | 5.30 | 11.70 |
| 2 | 1.90 | 5.75 | 12.25 |
| 3 | 1.95 | 6.10 | 13.20 |
| 4 | 1.85 | 5.50 | 12.50 |
| 5 | 1.90 | 5.75 | 12.25 |
| 6 | 1.85 | 5.45 | 12.55 |
| 7 | 1.75 | 5.50 | 12.45 |
| 8 | 1.80 | 5.30 | 12.40 |
| 9 | 1.85 | 5.65 | 11.70 |
| 10 | 1.85 | 5.65 | 12.50 |
| 11 | 1.70 | 5.55 | 12.60 |
| 12 | 1.75 | 5.20 | 11.80 |
| 13 | 1.80 | 5.20 | 12.40 |
| 14 | 1.70 | 5.30 | 11.80 |
| 15 | 1.75 | 5.75 | 12.70 |

(TABLE 8)   (continued)

| Sample No. | Frequency (actual measured value) | | |
| --- | --- | --- | --- |
| | Prim. | Sec. | 3rd |
| 16 | 1.85 | 5.95 | 12.30 |
| 17 | 1.75 | 5.20 | 12.10 |
| 18 | 1.75 | 5.60 | 12.90 |

These 18 samples were provided to seven anglers, and they actually swung the rods. Feeling evaluation test of "total feeling of swing" was conducted based on a scale of five. The score of each sample (see Table 9) was obtained by calculating the sum of respective evaluation values of anglers as total score (based on a scale of 35).

(TABLE 9)

| Sample No. | Feeling Evaluation (7 Anglers) | | | | | | | Total Score |
| --- | --- | --- | --- | --- | --- | --- | --- | --- |
| | A | B | C | D | E | F | G | |
| 1 | 1 | 5 | 4 | 5 | 3 | 4 | 5 | 27 |
| 2 | 3 | 1 | 2 | 4 | 4 | 1 | 2 | 17 |
| 3 | 1 | 3 | 1 | 4 | 3 | 1 | 1 | 14 |
| 4 | 3 | 1 | 1 | 2 | 3 | 4 | 3 | 17 |
| 5 | 1 | 1 | 2 | 4 | 3 | 2 | 1 | 14 |
| 6 | 3 | 4 | 3 | 3 | 3 | 1 | 4 | 21 |
| 7 | 5 | 2 | 3 | 2 | 5 | 4 | 2 | 23 |
| 8 | 3 | 3 | 3 | 5 | 3 | 1 | 3 | 21 |
| 9 | 2 | 2 | 2 | 2 | 4 | 3 | 3 | 18 |
| 10 | 3 | 4 | 1 | 4 | 2 | 2 | 2 | 18 |
| 11 | 4 | 5 | 5 | 1 | 1 | 5 | 5 | 26 |
| 12 | 2 | 5 | 5 | 2 | 4 | 2 | 5 | 25 |
| 13 | 2 | 3 | 4 | 1 | 3 | 3 | 3 | 19 |
| 14 | 4 | 4 | 4 | 3 | 5 | 5 | 4 | 29 |
| 15 | 2 | 4 | 5 | 2 | 4 | 2 | 4 | 23 |
| 16 | 2 | 3 | 3 | 3 | 2 | 2 | 4 | 19 |
| 17 | 4 | 2 | 5 | 4 | 1 | 3 | 3 | 22 |
| 18 | 5 | 2 | 5 | 3 | 2 | 5 | 2 | 24 |

Result of Feeling Evaluation and Total Score

Regression analysis was conducted for the total score data of feeling evaluation and the primary to third resonance frequencies, thus, they were plotted.
The following Tables 10 to 12 show the results.

(TABLE 10)

Primary Frequency and Score

This result shows that the total scores of feeling evaluation decrease as the primary resonance frequencies increase. The average value and standard deviation of total scores of feeling evaluation were 20.9 and 4.3, respectively. Accordingly, the boundary between "badly evaluated" and "middlingly evaluated" was set to 16.6 (20.9 - 4.3), thus, the primary resonance frequency at the boundary was calculated as 1.88 Hz. This value approximately matched the primary resonance frequency specified in the case of 9 shaku (2700 mm) in the present invention.

(TABLE 11)

## Secondary Frequency and Score

$y = -9.6874x + 74.602$

官能評価総合得点 (vertical axis)

第2次の共振振動数（Ｈｚ） (horizontal axis)

Similarly to the primary resonance frequency, as the secondary resonance frequency increases, the total score of feeling evaluation decreases. Similarly to in the case of the primary resonance frequency, the boundary between "badly evaluated" and "middlingly evaluated" was set to 16.6, thus, the secondary resonance frequency at the boundary was calculated as 5.99 Hz. This value approximately matched the secondary resonance frequency specified in the case of 9 shaku (2700 mm) in the present invention.

(TABLE 12)

**Third Frequency and Score**

$$y = -3.8382x + 68.303$$

官能評価総合得点

第3次の共振振動数（Ｈｚ）

35 30 25 20 15 10 5 0

11.50　12.00　12.50　13.00　13.50

Similarly to the primary resonance frequency, as the third resonance frequency increases, the total score of feeling evaluation decreases. Similarly to in the case of the primary resonance frequency, the boundary between "badly evaluated" and "middlingly evaluated" was set to 16.6, thus, the secondary resonance frequency at the boundary was calculated as 13.47 Hz. This value approximately matched the third resonance frequency specified in the case of 9 shaku (2700 mm) in the present invention.

[Industrial Applicability]

According to the present invention, it is possible to achieve preferable "characteristics of rod" similar to a fishing rod composed of a natural material as discussed above.

**Claims**

1.　A fishing rod having a relationship between the overall length of the fishing rod and the primary resonance frequency of the fishing rod where they lie in the region surrounded by respective points between 1.5 and 2.2 Hz in the overall length of 2400 mm, between 1.4 and 1.8 Hz in the overall length of 2700 mm, between 1.1 and 1.6 Hz in the overall length of 3000 mm, between 0.9 and 1.6 Hz in the overall length of 3300 mm, between 0.9 and 1.5 Hz in the overall length of 3600 mm, and between 0.9 and 1.4 Hz in the overall length of 3900 mm in coordinates with one axis of the overall length and another axis of the resonance frequency.

2.　A fishing rod having a relationship between the overall length of the fishing rod and the secondary resonance frequency of the fishing rod where they lie in the region surrounded by respective points between 5.2 and 7.3 Hz in the overall length of 2400 mm, between 4.5 and 6.3 Hz in the overall length of 2700 mm, between 4.3 and 5.6 Hz in the overall length of 3000 mm, between 3.7 and 5.6 Hz in the overall length of 3300 mm, between 3.5 and 5.3 Hz in the overall length of 3600 mm, and between 3.5 and 4.9 Hz in the overall length of 3900 mm in coordinates with one axis of the overall length and another axis of the resonance frequency.

**3.** A fishing rod having a relationship between the overall length of the fishing rod and the third resonance frequency of the fishing rod where they lie in the region surrounded by respective points between 11.6 and 15.4 Hz in the overall length of 2400 mm, between 10.5 and 13.4 Hz in the overall length of 2700 mm, between 9.4 and 12.1 Hz in the overall length of 3000 mm, between 8.5 and 12.0 Hz in the overall length of 3300 mm, between 8.5 and 11.2 Hz in the overall length of 3600 mm, and between 8.2 and 10.5 Hz in the overall length of 3900 mm in coordinates with one axis of the overall length and another axis of the resonance frequency.

**4.** A fishing rod having an overall length of 8 shaku (2400 mm), wherein the primary resonance frequency of the fishing rod is in the range between 1.5 and 2.2 Hz.

**5.** A fishing rod having an overall length of 9 shaku (2700 mm), wherein the primary resonance frequency of the fishing rod is in the range between 1.4 and 1.8 Hz.

**6.** A fishing rod having an overall length of 10 shaku (3000 mm), wherein the primary resonance frequency of the fishing rod is in the range between 1.1 and 1.6 Hz.

**7.** A fishing rod having an overall length of 11 shaku (3300 mm), wherein the primary resonance frequency of the fishing rod is in the range between 0.9 and 1.6 Hz.

**8.** A fishing rod having an overall length of 12 shaku (3600 mm), wherein the primary resonance frequency of the fishing rod is in the range between 0.9 and 1.5 Hz.

**9.** A fishing rod having an overall length of 13 shaku (3900 mm), wherein the primary resonance frequency of the fishing rod is in the range between 0.9 and 1.4 Hz.

**10.** A fishing rod having an overall length of 8 shaku (2400 mm), wherein the secondary resonance frequency of the fishing rod is in the range between 5.2 and 7.3 Hz.

**11.** A fishing rod having an overall length of 9 shaku (2700 mm), wherein the secondary resonance frequency of the fishing rod is in the range between 4.5 and 6.3 Hz.

**12.** A fishing rod having an overall length of 10 shaku (3000 mm), wherein the secondary resonance frequency of the fishing rod is in the range between 4.3 and 5.6 Hz.

**13.** A fishing rod having an overall length of 11 shaku (3300 mm), wherein the secondary resonance frequency of the fishing rod is in the range between 3.7 and 5.6 Hz.

**14.** A fishing rod having an overall length of 12 shaku (3600 mm), wherein the secondary resonance frequency of the fishing rod is in the range between 3.5 and 5.3 Hz.

**15.** A fishing rod having an overall length of 13 shaku (3900 mm), wherein the secondary resonance frequency of the fishing rod is in the range between 3.5 and 4.9 Hz.

**16.** A fishing rod having an overall length of 8 shaku (2400 mm), wherein the third resonance frequency of the fishing rod is in the range between 11.6 and 15.4 Hz.

**17.** A fishing rod having an overall length of 9 shaku (2700 mm), wherein the third resonance frequency of the fishing rod is in the range between 10.5 and 13.4 Hz.

**18.** A fishing rod having an overall length of 10 shaku (3000 mm), wherein the third resonance frequency of the fishing rod is in the range between 9.4 and 12.1 Hz.

**19.** A fishing rod having an overall length of 11 shaku (3300 mm), wherein the third resonance frequency of the fishing rod is in the range between 8.5 and 12.0 Hz.

**20.** A fishing rod having an overall length of 12 shaku (3600 mm), wherein the third resonance frequency of the fishing rod is in the range between 8.5 and 11.2 Hz.

**21.** A fishing rod having an overall length of 13 shaku (3900 mm), wherein the third resonance frequency of the fishing rod is in the range between 8.2 and 10.5 Hz.

Fig. 1

*Fig. 2*

(a)    100

P1

(b)

P1

P2

*Fig. 3*

180mm

80mm

Vibrator → Acceleration A

Acceleration B

*Fig. 4*

70°

Applying Load of 300 g at Fore End

Ranking Rigidity according to Percentage
of Height relative to Overall Length

*Fig. 5*

Fixed end

Fig. 6

$(x_1, y_1)$ $(x_2, y_2)$ $k_1$ $k_2$ $\theta_2$ $\theta_{n-1}$ $\theta_n$ $k_{n-1}$ $(x_{n-1}, y_{n-1})$ $k_n$ $(x_n, y_n)$

Fig. 7

**INTERNATIONAL SEARCH REPORT**

| International application No. |
| --- |
| PCT/JP03/00689 |

A. CLASSIFICATION OF SUBJECT MATTER
   Int.Cl$^7$ A01K87/00

According to International Patent Classification (IPC) or to both national classification and IPC

B. FIELDS SEARCHED

Minimum documentation searched (classification system followed by classification symbols)
   Int.Cl$^7$ A01K87/00-08

Documentation searched other than minimum documentation to the extent that such documents are included in the fields searched
   Jitsuyo Shinan Koho          1922–1996    Toroku Jitsuyo Shinan Koho    1994–2003
   Kokai Jitsuyo Shinan Koho    1971–2003    Jitsuyo Shinan Toroku Koho    1996–2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | CD-ROM of the specification and drawings annexed to the request of Japanese Utility Model Application No. 78168/1992 (Laid-open No. 34459/1994) (Daiwa Seiko Inc.), 10 May, 1994 (10.05.94), Full text; Figs. 1 to 3 (Family: none) | 1–21 |
| Y | JP 4-320637 A (Daiwa Seiko Inc.), 11 November, 1992 (11.11.92), Full text; Figs. 1 to 9 (Family: none) | 1–21 |
| Y | JP 2000-83518 A (Kabushiki Kaisha Shimano), 28 March, 2000 (28.03.00), Full text; Figs. 1 to 7 (Family: none) | 1–21 |

☐ Further documents are listed in the continuation of Box C.      ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>   12 May, 2003 (12.05.03) | Date of mailing of the international search report<br>   27 May, 2003 (27.05.03) |
| Name and mailing address of the ISA/<br>   Japanese Patent Office | Authorized officer |
| Facsimile No. | Telephone No. |

Form PCT/ISA/210 (second sheet) (July 1998)